# EUROPEAN PATENT SPECIFICATION

(11) **EP 0 450 224 B1**
(45) Date of publication and mention of the grant of the patent: **08.11.1995**
(21) Application number: 90310431.3
(22) Date of filing: 24.09.1990
(51) Int. Cl.: G02C 5/00

(54) **Spectacles frame member**
Brillengestell
Monture de lunettes

(30) Priority: 03.04.1990 JP 35912/90 U
(43) Date of publication of application: 09.10.1991
(73) Proprietor: NAKANISHI OPTICAL CO. LTD., Kita-ku, Osaka (JP)
(72) Inventor: Nakanishi, Eiichi, Ashiya, Hyogo (JP)
(74) Representative: Purvis, William Michael Cameron

(56) References cited:
- EP-A- 0 371 904
- DE-A- 3 503 644
- FR-A- 2 544 087
- GB-A- 264 337
- US-A- 3 944 344
- US-A- 4 801 199

## Description

The invention relates to a metal member used as a part of a spectacles frame.

It has been proposed to use stainless steels, nickel-chromium alloys, German silver, phosphor bronze and other metallic materials, to form the metal frames of spectacles. Recently, pure titanium or some nickel-titanium base alloys (i.e., Ni-Ti alloys) have been proposed for spectacles frames because of their excellent mechanical strength, corrosion resistance, spring property or resilience and light weight. In particular, Ni-Ti alloys are very useful in this field owing to their super elasticity which gives them a so-called "shape memory" property depending upon their composition.

It is however difficult to solder parts of pure titanium or Ni-Ti alloys to each other or to other materials. Such metal or alloys should thus be given a nickel or other coating by plating before they are soldered to other eyeglass parts made of German silver or other readily solderable materials, the plated coating thereby being interposed for instance between the Ni-Ti alloy phase and the German silver phase.

Such interposition of a plated coating however between the surfaces of soldered materials brings about insufficient junction strength. It is also disadvantageous to add such a plating step to the process for manufacturing the eyeglasses.

Patent Specification EP-A-338 586 discloses components of Ni-Ti alloy for making spectacle frames particularly temple pieces, a bridge piece for joining a pair of lens to one another and a nose bridge piece for joining two nose pieces. The four components of Ni-Ti alloy are each joined to the pair of lens to form a pair of spectacles.

Patent Specification EP-A-371 904 discloses rods of Titanium and extending through decorative elements, nose pieces and lens holding elements to mounting bosses of tubular form into which projections from other components can be inserted so that the mounting bosses form connecting means for the rods and other components and a pair of spectacles can be assembled.

According to the invention there is provided a spectacles frame member comprising a length of a rod-like material with super elasticity and shape-memory properties and having a middle section; a plurality of reduced diameter portions disposed at spaced apart positions on both sides of the middle section; and connecting pieces made of a highly solderable metal and respectively fitted in or wound around the reduced diameter portions; the middle section being formed into a bridge; intermediate sections to which the connecting pieces are fixed being formed into eyebrow portions to which a pair of lens rims can be attached; and end sections of the rod-like material being bent to form a pair of lugs extending rearwards.

Such a spectacles frame member can thus be formed as an integral part made of a material with super elasticity and lens rims and side arms of a spectacles assembly can be fixedly secured to such member so that the shape-memory property of the material is efficiently utilized to improve a spectacles assembly.

End connecting pieces made of the same or other highly solderable metal as the intermediate connecting pieces can be attached to the lugs at the reduced diameter portions so that hinges for mounting side arms can be secured thereto.

It is preferable to press the rod-like material and the connecting pieces into a flat shape, and simultaneously to engrave any decorative pattern on outer surfaces of said connecting pieces.

Such a spectacles frame member can be advantageous in that the bridge and lugs are formed of material with excellent shape-memory properties, and the lens rims and side arms can be rigidly fixed to the frame member by means of the connecting pieces.

In particular, a spectacles frame member may comprise the bridge, eyebrow portions to receive the lens rims, and the lugs for the side arms which are integral with each other and are made of the metal of super elasticity enhancing the shape-memory property. Even if a strong force causes the lens rims or the side arms to deform the frame member, the original shape will be recovered soon after the force is relieved, thereby to improve the function or comfortableness of spectacles made with such frame members. Components such as lens rims and side arms can be fastened to the spectacles frame member by means of the highly solderable connecting pieces, thereby providing spectacles of improved mechanical strength.

The invention is diagrammatically illustrated by way of example in the accompanying drawings, in which:
Figure 1 is a front elevation showing a rod-like material from which a spectacles frame member according to the invention can be formed;
Figure 2 illustrates a process for attaching connecting pieces to the rod-like material of Figure 1;
Figure 3 is a front elevation illustrating a process for shape-setting of the spectacles frame member;
Figure 4 is a plan view showing a finished shape of the spectacles frame member; and
Figure 5 is a perspective view showing main portions of a pair of spectacles assembled using a spectacles frame member according to the invention.

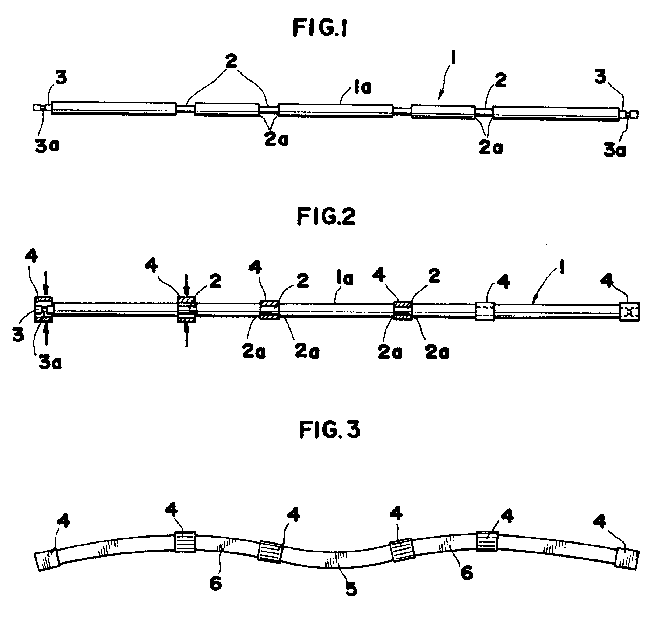

A piece of rod-like material 1 as shown in Figure 1 comprises the main component from which a spectacles frame member is made. The rod-like material 1 is a predetermined length of a Ni-Ti alloy rod which has super elasticity and excellent shape-memory properties. A middle section 1a is of a length corresponding to a desired bridge. Intermediate portions 2 of a reduced diameter are formed on both sides of the middle section 1a at suitable intervals, and end portions 3 of reduced diameter are formed at the ends of the rod-like material 1.

Intermediate and end connecting pieces 4 are made of a highly solderable metal such as German silver, and are of a cylindrical shape to be fitted onto the rod-like material 1. The length of the connecting pieces 4 is substantially the same as that of the reduced diameter portions 2 and 3. The connecting pieces 4 are fitted onto the reduced diameter portions 2 and 3, and thereafter pressed in directions perpendicular to the longitudinal axis of the rod-like material 1. The connecting pieces 4 which are thereby deformed into a depressed shape are tightly secured to the reduced diameter portions 2 and 3. Shoulders 2a located at boundaries of each intermediate portion 2 are effective to prevent the intermediate connecting pieces 4 from moving along the rod-like material in the axial direction thereof. Annular grooves 3a are formed respectively in the end thin portions 3 at the ends of the rod-like material so that the end connecting pieces 4 cannot be removed therefrom. It is preferable to force an inner surface portion of each end connecting piece 4 into each annular groove 3a, or to employ other suitable means for retaining the end connecting pieces 4 in the annular grooves 3a.

A blank comprising the rod-like material 1 and the connecting pieces 4 is subjected to a pressing operation wherein a depressed and curved shape as shown in Figure 3 is imparted to the blank at a single stroke. The middle section thereby becomes a bridge 5, and intermediate sections which include the intermediate connecting pieces 4 become eyebrow portions 6. It is desirable to engrave a decorative pattern on the outer surfaces of the connecting pieces 4 when the pressing process is effected.

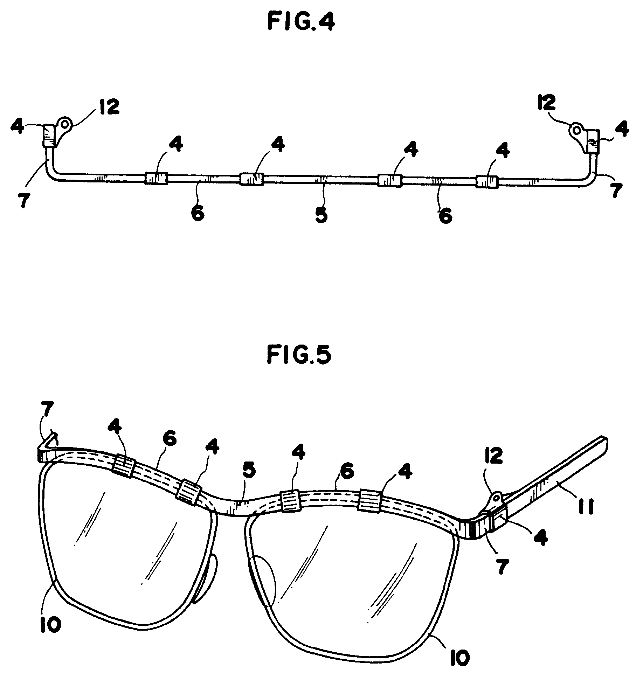

Subsequently, end sections of the blank are bent to extend parallel to each other at the same side of the blank so as to form lugs 7 which complete the spectacles frame member as shown in Figure 4.

Figure 5 illustrates a spectacles assembly including the spectacles frame member as described above. A pair of lens rims 10 are soldered or welded to the intermediate connecting pieces 4 provided on the eyebrow portions 6. A pair of side arms 11 are fastened to hinges 12 which are soldered or welded to the end connecting pieces 4 of the lugs 7.

## Claims

1. A spectacles frame member comprising a length of a rod-like material (1) with super elasticity and shape-memory properties and having a middle section (1a); a plurality of reduced diameter portions (2, 3) disposed at spaced apart positions on both sides of the middle section (1a); and connecting pieces (4) made of a highly solderable metal and respectively fitted in or wound around the reduced diameter portions (2, 3); the middle section (1a) being formed into a bridge (5); intermediate sections to which the connecting pieces (4) are fixed being formed into eyebrow portions (6) to which a pair of lens rims (10) can be attached; and end sections of the rod-like material being bent to form a pair of lugs (7) extending rearwards.

2. A spectacles frame member according to claim 1, including further connecting pieces (4) of a highly solderable metal fixed to the lugs (7).

3. A spectacles frame member according to claim 1 or claim 2, wherein the rod-like material (1) with the connecting pieces (4) thereon is pressed into a desired shape.

## Patentansprüche

1. Brillengestell mit einer Länge eines stabartigen Materials (1) mit Superelastizität und Formspeichereigenschaften und mit einem Mittelabschnitt (1a), mehreren Abschnitten (2, 3) mit reduziertem Durchmesser, die in Positionen in Abstand voneinander auf beiden Seiten des Mittelabschnittes (1a) angeordnet sind, und Verbindungsstücken (4) aus einem hochlötbaren Metall und jeweils in die Abschnitte (2, 3) mit reduziertem Durchmesser eingepaßt oder um diese gewickelt, wobei der Mittelabschnitt (1a) zu einer Brücke (5) geformt ist, Zwischenabschnitten, an denen die Verbindungsstücke (4) fixiert sind und die zu Augenbrauenabschnitten (6) geformt sind, an denen ein Paar von Linsenrändern (10) befestigt werden kann, und Endabschnitten des stabartigen Materials, die zu einem Paar sich nach hinten erstreckender Ansätze (7) umgebogen sind.

2. Brillengestell nach Anspruch 1, das weiterhin Verbindungsstücke (4) eines hochlötbaren Metalles einschließt, welche an den Ansätzen (7) befestigt sind.

3. Brillengestell nach Anspruch 1 oder Anspruch 2, bei dem das stabartige Material (1) mit den Verbindungsstücken (4) darauf in eine erwünschte Form gepreßt ist.

## Revendications

1. Elément de monture de lunettes comprenant une certaine longueur d'une matière de type tige (1) avec des propriétés de superélasticité et de mémoire de forme et comportant : une section milieu (1a) ; plusieurs parties de diamètre réduit (2, 3) disposées dans des positions écartées de chaque côté de la section milieu (1a) ; et des pièces de raccordement (4) faites d'un métal très brasable et montées respectivement sur, ou entourant, les parties de diamètre réduit (2, 3) ; la section milieu (1a) étant conformée en un pontet (5) ; les sections intermédiaires auxquelles les pièces de raccordement (4) sont fixées étant conformées en parties barres frontales (6) auxquelles une paire d'entourages de verre (10) peut être fixée ; et des sections d'extrémité de la matière de type tige étant recourbées pour former une paire de pattes (7) s'étendant vers l'arrière.

2. Elément de monture de lunettes selon la revendication 1, comprenant en outre des pièces de raccordement (4) d'une matière facile à braser fixée aux pattes (7).

3. Elément de monture de lunettes selon la revendication 1 ou la revendication 2, dans lequel la matière de type tige (1) avec les pièces de raccordement (4) qu'elle porte est pressée à une forme voulue.
